# EUROPEAN PATENT APPLICATION

(11) **EP 1 259 059 A2**
(43) Date of publication of application: **20.11.2002**
(21) Application number: 02253155.2
(22) Date of filing: 03.05.2002
(51) Int. Cl.: H04N 1/00

(54) **Adjustable image capturing system**

(30) Priority: 17.05.2001 GB 0112041
(71) Applicant: Hewlett-Packard Company, Palo Alto, CA 94304 (US)
(72) Inventor: Pilu, Maurizio, Bristol BS7 0RJ (GB)
(74) Representative: Lawrence, Richard Anthony

(57) **Abstract**

An image capturing system comprises an image capturing device mounted on a support so as to be manually adjustable in three dimensions relative thereto. The system further comprises analysis apparatus for determining the presence of any part of said support in the field of view of said image capturing device and/or its appearance in an image captured by said image capturing device.

## Description

### Field of the Invention

This invention relates to an adjustable image capturing system, and in particular, to a desktop image capturing system having a camera or the like mounted on a support which holds the camera above a document or the like, thereby allowing an image of the document to be captured. The field of view of the camera can be changed by adjustment, manual or otherwise, of the camera relative to the support.

### Background of the Invention

Many desktop camera-projector systems exist. For example, European Patent Application No. EP-A-0622722 describes one such system which generates new documents by capturing information contained within a hardcopy document including text and/or images. The system captures the information using a camera-projector device directed at the hardcopy document as it resides on a desk or other surface. The system also works in conjunction with a printer or copier, and it determines which functions are to be performed based upon input from the user captured by the camera.

US Patent No. 6,067,112 describes a similar type of desktop image capturing system, the field of view of which can be relatively easily adjusted by manipulating the feedback image which the system projects onto a source document. In response to such manipulation, the system determines the user's requirements and adjusts the field of view of the camera accordingly.

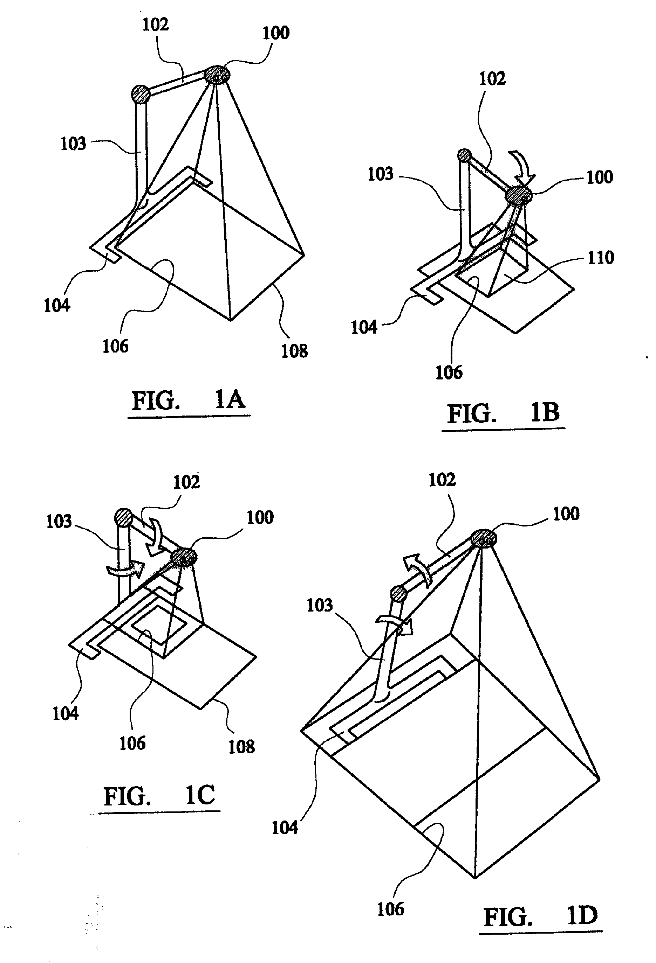

In many circumstances, the field of view of the camera is required to be changed by adjusting the position of the camera relative to the support on which it is mounted. Referring to Figure 1A of the drawings, there is illustrated a desktop image capturing system according to the prior art. The system comprises a camera 100 mounted to an articulated arm 102 which is connected to a rigid lower arm 103 connected to a document guide or stand 104. The assembly comprising the articulated arm 102, the lower arm 103 and the document guide 104 will hereinafter be referred to as 'the support'. In the position shown in Figure 1A, the field of view 106 of the camera 100 substantially exactly matches the document 108 to be captured. In fact, systems do exist in which the camera 100 and arm 102 are mounted rigidly relative to one another and the document guide 104, or fixed in use, the field of view 106 being set such that it substantially matches, for example, an A4 page at a predetermined distance from the camera.

Referring now to Figures 1B to 1D, in the case where the position of the camera 100 is adjustable, when the camera position is moved (by moving the articulated arm 102 relative to the lower arm 103 and/or adjusting the orientation, pitch and altitude of the camera 100 relative to the articulated arm 102), the field of view changes and, in each case shown in Figures 1A-1D, captures a portion of the support in the image. In Figure 1B, there is illustrated the case where the camera 100 is moved closer to, for example, a 5"x3" photograph 110 in order to maximise the capture resolution. The field of view 106 now includes a portion of each of the document guide 104 and the lower arm 103. Similarly, in Figure 1C, the user has moved the camera to capture a graph at the top-right of the document 108, thereby once again including in the field of view 106 a portion of each of the document guide 104 and the lower arm 103. In Figure 1D, the camera has been moved away from the document 108 in order to increase the size of the field of view 106. In this case, the field of view 106 includes the entire document guide 104 and a large portion of the lower arm 103.

The inclusion of any part of the support is clearly undesirable, as it reduces the quality of the reproduced image. However, as explained above and as shown in Figures 1B-1C, in some arrangements, the inclusion of at least part of the support in the camera's field of view is unavoidable in some camera positions.

European Patent Application 0924923 describes a document copying arrangement in which features of the copier itself determined to be present in its field of view (i.e not covered by the document) are suppressed. However, this arrangement would not be suitable for use with a document camera in which the camera is adjustable in the three dimensions relative to the support because in this case, the appearance of the support in the field of view would not be predictable, whereas in the arrangement described in EP0924923, once the size of the document is known the visible parts of the apparatus would be effectively known or at least easily predictable.

Obviously, one solution would, or course, be to design the system in such a way that the appearance of the support within the camera field of view would not occur in any camera position. However, in such an arrangement, the user would be severely constrained as to the available camera positions and fields of view. Thus, this solution is not particularly suitable if the system is required to provide substantial casual desktop capture without constraining the user unduly.

We have now devised an arrangement which overcomes the problem outlined above.

### Summary of the Invention

In accordance with the present invention, there is provided an image capturing system, comprising an image capturing device mounted on a support so as to be manually adjustable in three dimensions relative thereto, and means for determining the presence of any part of said support in the field of view of the image capture device and/or in an image captured by said image capturing device.

In one embodiment of the invention, the system includes means for detecting the presence of any part of the support and removing or masking the detected part of the support from the final image output by the image capturing device.

In another embodiment of the invention, the system may include means for separating the image required to be captured by the image capturing device from any background within the image captured by the image capturing device, said separating means being arranged to disregard any pixels in the image which relate to the detected part of the support, i.e. the detected part(s) of the support are treated as 'mask(s) ' and as such are ignored (or treated as part of the background) by the separating means.

Note that systems for separating sections of an image are generally known. For example, US Patent No. 6,064,762 describes a system which separates foreground information on a document from background information by superimposing (in an additive or subtractive manner) the foreground information on the background information. In another such system, the background information can be assigned a particular colour, for example, in which case, the separating means may be arranged to 'fill in' the detected part(s) of the support with the colour assigned to the background information.

The detecting means may include means for storing a full tri-dimensional model of the system, and means for determining (or at least estimating) the location of the camera relative to the support (or for determining the location of the support relative to the image capturing device). In order to facilitate this, the image capturing device is preferably calibrated such that a three-dimensional object matching algorithm using the model of the system can be applied to detect the presence of the support in the field of view of the image capturing device and determine its location with respect to the image capturing device (or vice versa) In one embodiment, a few features of the support within a captured image can be detected and the rest 'filled in' using an object matching algorithm.

Alternatively, the support may be provided with one or more markings (for example, coloured), indentations, or similar features which are easy to detect and can be used to determine (or at least estimate) the location of the image capturing device relative to the support (or to determine the location of the support relative to the image capturing device). This makes the detection process faster, easier and more robust than if it was required to detect the frame itself within a captured image.

In either case, the position determining means may be arranged to analytically compute the appearance of the support in an image captured by the image capturing device using the determined or estimated relative locations of the image capturing device and the support, and/or one or more detected key features. Once the appearance of the support in the image has been computed, it can be removed or masked. The determining means is preferably arranged to take into account the constrained relative positions of the image capturing device and the support (which depends upon the type and number of joints in the structure) when determining or estimating the relative positions of the image capturing device and the support.

In another embodiment, the appearance of the support in a captured image can be predicted using data received from sensors which determine the camera orientation, pitch and altitude relative to the support, and/or with full feedback relating to the position of the camera (using knowledge of the joint angles, etc).

In yet another embodiment, an object matching algorithm may match one (or more) key feature(s) of the support within a captured image and estimate the position of the support in the image as a starting point for a subsequent image-based detection process to more accurately determine the appearance of the support in the image.

The analytical computation of the appearance of the support in the image is, by its very nature, an estimation, and may be used as a starting point for a more detailed search for the true appearance of the support in the image, using, for example, simple region growth or more sophisticated methods. In one embodiment of the present invention, once the appearance of the support in the image has been determined, it can be deleted and the system may optionally be arranged to rebuild the image by analysis of the remaining image.

### Brief Description of the Drawings

Figure 1A is a schematic diagram illustrating a desktop image capturing system according to the prior art;
Figures 1B-D illustrate the field of view of the camera in the system of Figure 1A when the camera is moved relative to the support upon which it is mounted; and
Figure 2 is a schematic block diagram representing a desktop image capturing system according to an exemplary embodiment of the present invention.

### Detailed Description of the Invention

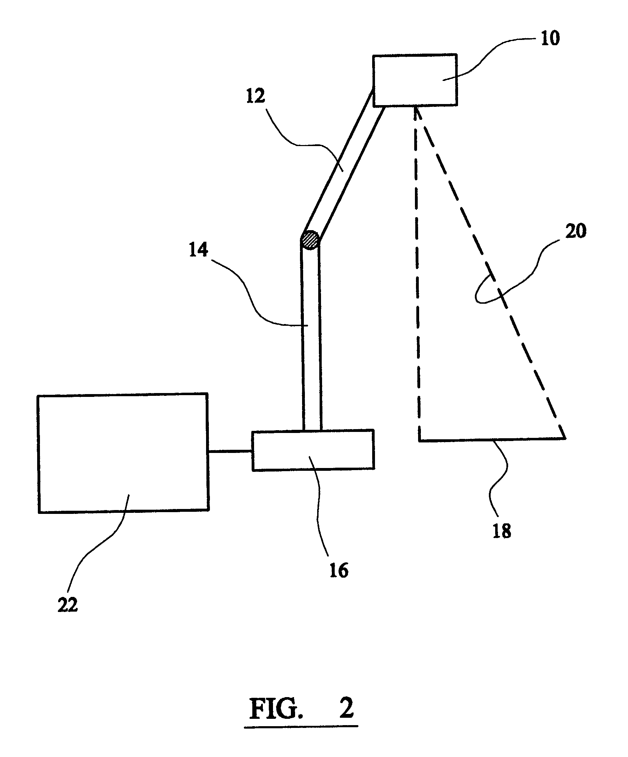

Referring to Figure 2 of the drawings, a desktop image capturing system according to an exemplary embodiment of the present invention comprises a camera 10 which is mounted on an articulated arm 12 so as to be movable relative thereto. The articulated (upper) arm 12 is connected or joined to a rigid lower arm 14 mounted on a document guide or stand 16. In use, a user positions the camera over a document 18 or the like to obtain an image thereof.

As described above with reference to Figures 1B-D of the drawings, there are several different positions of the camera 10 relative to the upper arm 12, the lower arm 14 and the document guide or stand 16 (hereinafter collectively called 'the support') in which at least part of the support will be included in the field of view 20 of the camera 10 and, therefore, the final image output by the camera 10.

The system includes detecting means 22 for detecting where, if any, part(s) of the support are included in the field of view of the camera 10 and which will, therefore be present in the image captured thereby, and for deleting them. In one embodiment of the invention, the presence of part(s) of the support in the camera's field of view may be achieved by mapping the estimated field of view using predetermined data defining the relative positions of the camera 10 and the various elements of the support and information relating to the camera's position and orientation.

However, in one preferred embodiment, the detecting means 22 includes means for applying a three-dimensional object matching algorithm to the image captured by the camera 10. In this case, the detecting means would have stored therein a full tri-dimensional model of at least the support, but preferably the whole system relative to the camera 10. When an image is captured, the object matching algorithm is applied thereto to locate any part(s) of the support included therein. Those parts, once detected, can be deleted.

The object matching algorithm may be based on a well-known 2D-3D model matching method, such as the one proposed by Bolles, Horaud and Hannah (Robotic Research, The first symposium, MIT Press, 1984), many variations of which have since been proposed. Such methods are based on a hypothesize-and-test strategy and are particularly suitable because they can be used to locate three-dimensional objects in an image from sparse image data, such as a few edges and junctions. Further, such methods are fairly robust to occlusions. The algorithm used should be tuned to the type of camera support used. For example, the camera support may be curvy, as opposed to the more preferred faceted version (which is easier to deal with).

In yet another embodiment, however, particular characteristics of the support may be used to enable model-less detection of part(s) of the support within the image captured by the camera 10. Such characteristics may comprise, for example, its colour and/or texture.

In an embodiment which combines some of the above ideas, the detection means 22 may only store a wireframe or surface model of the system (as opposed to the full tri-dimensional model referred to above) such that an object matching or recognition algorithm could be used to recognise the appearance of part(s) of the support in the image captured by the camera 10. The final determination of the exact location of such parts of the support in the image could be refined in a successive stage. Further, a multi-resolutional model could be employed, which uses its low-order representation for matching and its most precise one for re-projection and removal of any part(s) of the support from the captured image.

The presence of markers of any sort, such as indentations, on the support will make the recognition system faster, more efficient and more robust because relatively simple matching algorithms can be used. If the marker were to lay in a plane, only four such markers would be required to determine the support position with respect to the camera 10 (see, for example, Haralick and Shapiro: Computer Vision, Addison Wesley).

The detection means 22 preferably takes into account the constrained relative position of the camera 10 with respect to the support (which depends, among other things, on the type and number of joints used to connect the camera 10 to the support) when it is determining the location of the support relative to the camera (or vice versa). This embodiment could benefit from well known techniques in the field of robotics, in particular arms and manipulators, where joint constraints and the trajectory manifold are taken into account by the sensory and vision systems. See, for example, Richard P. Paul, Robot Manipulators-Mathematics, Programming, and Control, MIT Press, 1981.

In the foregoing specification, the invention has been described with reference to specific exemplary embodiments thereof. It will, however, be apparent to a person skilled in the art that various modifications and changes may be made thereto without departing from the broader spirit and scope of the invention as set forth in the appended claims. Accordingly, the specification and drawings are to be regarded in an illustrative, rather than a restrictive, sense.

## Claims

1. An image capturing system, comprising an image capturing device (10) or camera mounted on a support (12,14,16) so as to be manually adjustable in three dimensions relative thereto, and means (22) for determining the presence of any part of said support (12,14,16) in the field of view (20) of said image capturing device (10) and/or its appearance in an image captured by said image capturing device (10).

2. An image capturing system according to claim 1, including means (22) for detecting the presence of any part of the support (12,14,16) and for removing or masking the detected part or parts of the support (12,14,16) from the final image output by said image capturing device (10).

3. An image capturing system according to claim 1 or claim 2, including means (22) for separating part of a captured image from one or more other parts of said captured image, said separating means (22) being arranged to disregard any pixels in the image corresponding to the detected part or parts of the support (12,14,16).

4. An image capturing system according to claim 1 or claim 2, including means (22) for separating part of a captured image from one or more other parts of said captured image, means for assigning a particular colour to said one or more other parts of the captured image, and means for filling said detected part or parts of the support (12,14,16) with said particular colour.

5. An image capturing system according to any one of claims 1 to 4, wherein said means (22) for determining the presence or appearance of part or parts of the support (12,14,16) comprises means for storing a two or three-dimensional model of at least the support (12,14,16) and means (22) for applying an object matching algorithm to an image captured by said image capturing device (10) so as to determine the presence and/or location of said part or parts of the support (12,14,16) in the image.

6. An image capturing system according to any one of claims 1 to 4, wherein said support (12,14,16) is provided with one or more markings, indentations, or similar features which are relatively easy to detect, to facilitate the determination or estimation of the location of said image capturing device (10) relative to said support (12,14,16) or vice versa.

7. An image capturing system according to claim 5 or claim 6, arranged to analytically compute the appearance of the support (12,14,16) in an image captured by the image capturing device (10) using determined or estimated relative locations of the image capturing device (10) and the support (12,14,16).

8. An image capturing system according to claim 7, wherein the analytical computing means (22) is arranged to take into account the constrained relative positions of the image capturing device (10) and the support (12,14,16).

9. An image capturing system according to any one of the preceding claims, wherein said presence determining means (22) is arranged to predict the appearance of the support (12,14,16) in a captured image using data received from sensors which determine the camera orientation, pitch and/or altitude relative to the support, and/or with full feedback relating to the position of the camera (10) (using knowledge of the joint angles, etc).

10. An image capturing system according to any one of the predetermined claims wherein said position determining means (22) is arranged to employ an object matching algorithm to match one (or more) key feature(s) of the support (12,14,16) within a captured image and estimate the position of the support (12,14,16) in the image as a starting point for a subsequent image-based detection process to more accurately determine the appearance of the support (12,14,16).
